# EUROPÄISCHE PATENTSCHRIFT

(11) **EP 0 718 942 B1**
(45) Veröffentlichungstag und Bekanntmachung des Hinweises auf die Patenterteilung: **09.09.1998**
(21) Anmeldenummer: 95120115.1
(22) Anmeldetag: 19.12.1995
(51) Int. Cl.: H02B 13/035

(54) **Hochspannungsanlage**
High voltage installation
Installation à haute tension

(30) Priorität: 22.12.1994 DE 4445866
(43) Veröffentlichungstag der Anmeldung: 26.06.1996
(73) Patentinhaber: ABB PATENT GmbH, 68309 Mannheim (DE)
(72) Erfinder: Müller, Ottmar, D-12459 Berlin (DE)
(74) Vertreter: Rupprecht, Klaus, Dipl.-Ing.

(56) Entgegenhaltungen:
- ELEKTRI Bd. 48, Nr. 10, 1994, BERLIN, DE, Seiten 368 - 371, XP000491750 O. MÜLLER 'Ein neues neues Schaltanlagenkonzept für den Spannungsbereich von 36...72,5 kV'
- PATENT ABSTRACTS OF JAPAN Bd. 18, Nr. 3 (E-1485) 06 Januar 1994 & JP-A-05 244 710 (HITACHI LTD) 21 September 1993

## Beschreibung

Die Erfindung betrifft eine elektrische, gasisolierte metallgekapselte Hochspannungsanlage gemäß dem Oberbegriff des Anspruches 1 (Vgl. z.B JP-A-05 244 710).

Kabelendverschlüsse sind an elektrischen Schaltanlagen an speziellen Gehäuseteilen angebracht, und benötigen dabei relativ viel Raum.

Aufgabe der Erfindung ist es, eine Schaltanlage der eingangs genannten Art zu schaffen, bei der die Zuordnung eines Kabelendverschlusses vereinfacht ist. Insbesondere sollen weitere Kabelendverschlüsse auf einfache Weise angebracht werden können.

Diese Aufgabe wird erfindungsgemäß gelöst durch die kennzeichnenden Merkmale des Anspruches 1.

Danach können der wenigstens eine Kabelanschluß und eine Durchführungsanordnung für einen Schaltkammerraum und weitere Komponenten, beispielsweise ein Kurzschließer und/oder eine Spannungsanzeigeanordnung und dgl. für jede Phase jeweils am Umfang des zylinderförmigen Gehäuses im wesentlichen in einer Ebene angeschlossen sein, die senkrecht zum Innenleiter oder der Mittelachse des zylinderförmigen Gehäuses verläuft.

Wenn der Innenleiter gemäß Anspruch 2 eine der Anzahl der Phasen entsprechende Anzahl von Anschlußblöcken aufweist, die gegeneinander und gegen das Gehäuse mittels dazwischen befindlicher Isolierelemente isoliert sind, wobei die Anschlußblöcke jeder Phase und die Isolierelemente in einer Achse liegen, dann können die einzelnen Komponenten an dem Anschlußblock rad- bzw. speichenförmig jeweils in einer Ebene angeordnet werden, wobei diejenigen Komponenten mit gleicher Phase jeweils in einer Ebene liegen. Dadurch werden eine Vereinfachung und eine Einsparung an Platz erzielt.

Weitere vorteilhafte Ausgestaltungen und Verbesserungen der Erfindung sind den Unteransprüchen zu entnehmen.

Mit der Erfindung wird eine Schaltanlagenkomponente erreicht, mit der eine räumlich wenig platzbeanspruchende Zuordnung eines bzw. zweier Kabelendverschlüsse zu einer Schaltanlage erreicht werden kann. Darüberhinaus können im Bereich der Kabelendverschlüsse weitere Komponenten vorgesehen sein, die normalerweise an anderen Stellen angeordnet sein müßten.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Längsschnittansicht gemäß Schnittlinie I-I der Fig. 2 und
- Fig. 2: eine Schnittansicht gemäß der Schnittlinie II-II der Fig. 1.

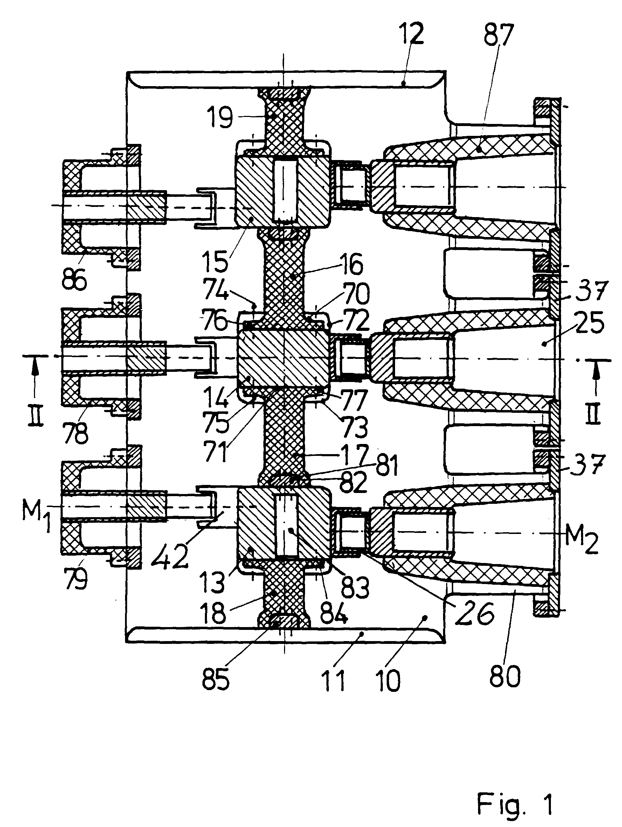

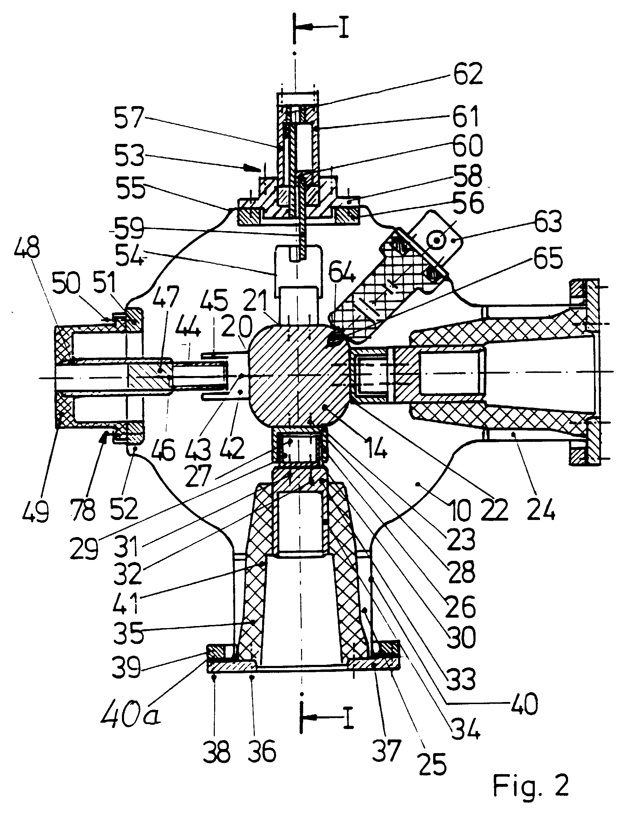

Die erfindungsgemäße Anordnung gemäß Fig. 1 und 2 besitzt ein zylinderförmiges Gehäuse 10 aus dünnem Blech, welches an seinen Stirnenden mittels eines Deckels 11 und 12 verschlossen ist. Zwischen den Deckeln 11 und 12 auf der Mittelachse des zylindrischen Gehäuses 10 sind hintereinander angeordnet drei Anschlußblöcke 13, 14, 15, zwischen denen sich zwei Stabisolatoren 16 und 17 zur Isolation der Anschlußblöcke 13 bis 15 gegeneinander befinden; die Anschlußblöcke 13 und 15 sind mittels Isolatoren 18 und 19 gegenüber den Deckeln 11 und 12 isoliert. Die Anschlußblöcke 13 bis 15 besitzen, wie aus Fig. 2, die den Anschlußblock 14 zeigt, ersichtlich ist, im Prinzip im Querschnitt eine Kreisform, die vier im Winkel von 90° einander zugeordnete, sich gegenüberliegende Abflachungen 20, 21, 22 und 23 aufweist. An den um 90° gegeneinander versetzten Abflachungen 22 und 23 sind Kabelendverschlüsse 24 und 25 angeschlossen, die sich gleichen, so daß die Struktur lediglich anhand des Kabelendverschlusses 25 erläutert wird.

An der Abflachung 23 ist ein napfförmiger Anschlußtopf 26 mit Schrauben 27 und 28 befestigt, wobei die offene Seite zum Kabelendverschluß 25 hingerichtet ist. In den Innenraum des Anschlußtopfes 26 greift ein Gegenkontakttopf 30 mit seiner Zylinderwandung ein, und zwischen der Innenfläche des Anschlußtopfes und der Außenfläche des Gegenkontakttopfes 30 sind Vielfachkontakte angebracht. An der Außenfläche des Bodens des Gegenkontakttopfes 30 ist die Außenfläche des Bodens eines Kontakttopfes 33 mittels Schrauben 31 und 32 angeschraubt, dessen zylindrische Seitenwand 34 selbt wiederum von einem Isolierkörper 35 umgeben ist. Der Isolierkörper 35 ist etwa zylinderförmig und besitzt zur Bildung eines Kabelendverschlusses eine an sich bekannte Form. An den freien Stirnflächen des Isolierkörpers 35 ist eine Flanschplatte 37 mittels Schrauben 36 befestigt, die selbst wiederum mittels Schrauben 38 an einem Befestigungsflansch 39 angebracht ist, der am freien Ende eines Rohrstutzens 40 angeschlossen ist, welcher Rohrstutzen 40 Teil des Gehäuses 10 ist. Das freie Ende des Rohrstutzens 40 besitzt eine radiale Aufbördelung 40a, auf deren Außenseite der Befestigungsflansch 37 und auf deren dem Gehäuse 10 zugewandten Seite der Befestigungsflansch 39 angebracht sind. Innerhalb des Isolierkörpers 25 ist ein ringförmiges Feldsteuerelement (nicht dargestellt) eingegossen.

An der Abflachung 22 ist der dem Kabelendverschluß 25 gleichende Kabelendverschluß 24 auf gleiche Weise angeschlossen.

An der Abflachung 20 ist ein Anschlußkontaktstück 42 mittels einer Schraube 43 befestigt, in das ein Topfanschlußkontaktstück 44 eingreift und damit elektrisch leitend verbunden ist. Die beiden Kontaktstücke sind in üblicher Weise miteinander kontaktiert, z. B. können zwischen der Außenfläche des Kontaktstückes 44 und der Innenfläche der Wandung 45 an sich bekannte Vielfachkontaktanordnungen (Multilamellenkontakte) vorgesehen sein. Das Topfanschlußkontaktstück 44 ist mittels einer Schraube 46 an einem Anschlußstück 47 befestigt, welches von einem Kontaktrohr 48 umfaßt ist, welches selbst wiederum von einem Durchführungs- oder Schottisolator 49 umgeben ist; der Schottisolator 49 ist mittels Schrauben 50 einem dem Befestigungsflansch 39 entsprechenden Befestigungsflansch 51 angeschlossen. An dem Schottisolator 49 schließt dann ein Leistungsschalter, vorzugsweise ein SF₆-Leistungsschalter (nicht gezeigt) an. Die Mittelachse des Rohres 48 bzw. des Schottisolators 49 fluchtet mit der Mittelachse des Kabelendverschlusses 24 und verläuft senkrecht zur Mittelachse des Kabelendverschlusses 25. Der Befestigungsflansch 51 ist in einem weiteren Ausgangsstutzen 52 des Gehäuses 10 eingesetzt.

Diametral gegenüber dem Rohrstutzen 40 befindet sich ein Kurzschließer 53. Dessen festes Kontaktstück 54 ist auf der Abflachung 21 am Anschlußblock 14 befestigt; an einem Stutzen 55 ist ein Befestigungsflansch 56 angebracht, an dem eine Gehäuseanordnung 57 mittels Schrauben 58 angeflanscht ist, in der ein stangenförmiges bewegliches Kontaktstück 59 des Kurzschließers 53 geführt ist. Dieses bewegliche Kontaktstück 59 ist mit einem Kolben 60 fest verbunden, der in einem Zylinder 61 der Gehäuseanordnung 57 verschieblich geführt ist; über eine Fluidzuführungsöffnung 62 wird dem Innenraum des Zylinders 61 oberhalb des Kolbens 60 Druckfluid zugeführt, so daß das bewegliche Kontaktstück 59 aus der links der Mittellinie gezeichneten Ausschaltstellung in die rechts der Mittellinie gezeichnete Einschaltstellung verbracht werden kann.

Die beiden Kabelendverschlüsse 24 und 25 sowie der Anschluß für den Leistungsschalter und die Kurzschließeranordnung sind um 90° zueinander angeordnet, wobei die Kurzschließeranordnung 53 mit dem Kabelanschluß 25 und die Leistungsschalteranordnung mit dem Kabelandschluß 24 jeweils fluchten. Winkelig zwischen dem Kurzschließer 53 und dem Kabelendverschluß 24 ist eine Spannungsanzeigevorrichtung 63 angeordnet, die nicht näher beschrieben ist und mittels eines Kontaktstiftes 64 in eine Ausnehmung 65 am Anschlußblock 14 eingreift. Diese Spannungsanzeigevorrichtung 63 kann entfernt werden.

Es sei nun wieder Bezug genommen auf die Fig. 1.

An den quer zu seiner Zylinderform vorgesehenen Seitenflächen 70 und 71 des Anschlußblockes 14, die quer zur Längsachse des Gehäuses 10 verlaufen, sind Abschirmbleche 72 und 73 mittels Schrauben 74 und 75 befestigt, mit denen gleichzeitig auch verbreiterte Füße der Isolatoren 16 bzw. 17 an der Seitenfläche 70 bzw. 71 befestigt sind.

Die beiden anderen Anschlußblöcke 13 und 15 sind, wie oben angedeutet, in gleicher Weise ausgebildet, was die Abflachungen einerseits und die Anschlußmöglichkeiten von Kabelendverschlüssen und anderer Komponenten andererseits betrifft. Im Gegensatz allerdings zu dem Anschlußblock 14 sind die beiden Anschlußblöcke 13 und 15 in axialer Richtung etwas länger ausgebildet. An dem Anschlußblock 13 und an dem Anschlußblock 15 sind der Durchführungsanordnung 78 gleichende Durchführungsanordnungen 79 und 86 angeschlossen, ebenso auf der diametral gegenüberliegenden Seite Kabelendverschlüsse 80 und 87.

Bei dem Anschlußblock 13 ist die Mittelachse M₁ der der Durchführungsanordnung 78, die anhand der Fig. 2 beschrieben ist, entsprechenden Durchführungsanordnung 79 gegenüber der Mittelachse M₂ einer der Kabeldurchführung 24 entsprechenden Kabeldurchführung 80 versetzt; der Abstand der Mittelachse der Durchführungsanordnung 78 von der Mittelachse M₁ ist kleiner als der Abstand der Mittelachse der Kabeldurchführung 25 von der Mittelachse M₂. Man erkennt auch in Fig. 1, daß die Mittelachse des Kabelendverschlusses 25 durch den Mittelpunkt des Anschlußblockes 14 hindurch verläuft, wogegen die Mittelachse M₂ aufgrund des Außendurchmessers des Flansches 87 bzw. des Flansches 37 des Kabelendverschlusses 25 geringfügig in Richtung zum Deckel verschoben und die Achse M₁ hin zu der zum Anschlußblock 14 weisenden Stirnfläche versetzt ist. In gleicher Weise gilt dies auch für die Mittelachse der Durchführungsanordnung 86 und den Kabelendverschluß 87. Man erkennt, daß eine Mantellinie des Anschlußtopfes 26 für den Kabelendverschluß 80 mit der deckelseitigen Stirnfläche und eine Mantellinie des Topfes der Durchführungsanordnung 79 mit der entgegengesetzten Stirnfläche fluchten. In den Stabisolator 17 ist an dem zum Anschlußblock 13 gerichteten Ende eine Anschlußelektrode 81 eingebracht, an der das Anschlußblock 13 mittels Schrauben 82 befestigt ist. Zu diesem Zweck besitzt der Anschlußblock 13 eine zylindrische Ausnehmung 83, durch die die Schrauben 82 von der deckelseitigen Stirnfläche aus zugänglich sind. Der Stabisolator 18 besitzt an seinem einen deckelseitigen Ende einen Fuß 84, mit dem er am Anschlußblock 13 befestigt ist; das dem Fuß 84 entgegengesetzte Ende besitzt eine Anschlußelektrode 85, mit der der Stabisolator 18 am Deckel 11 befestigt ist.

Der Anschluß des Stabisolators 16 am Anschlußblock 15 erfolgt in gleicher Weise wie der Anschluß des Stabisolators 17 am Anschlußblock 13, und die Fixierung des Stabisolators 19 am Anschlußblock 15 und am Deckel 12 erfolgt in gleicher Weise wie beim Stabisolator 18. Auch am Anschlußblock 15 ist die Durchführungsanordnung 86 gegenüber der Mittelachse des Kabelendverschlusses 87 versetzt, so daß der Abstand der Durchführungsanordnung 26 von der Durchführungsanorndung 78 kleiner ist als der Abstand der Mittelachse des Kabelendverschlusses 87 vom Kabelendverschluß 25; die Schnittlinie II-II ist die Symmetrieebene für die Anordnung gemäß Fig. 1.

Selbstverständlich ist es möglich, auch zwischen die Durchführung 78 und den Kurzschließer 53 eine der Spannungsanzeigevorrichtung 63 entsprechende Komponente einzubauen; es kann auch eine Phasenvergleichsanordnung dort vorgesehen werden.

Anstatt des Kabelendverschlusses 24 kann auch ein Spannungswandler angeschlossen sein. Das Gehäuse 10 ist mit Isoliergas, vorzugsweise SF₆-Gas, befüllt.

## Patentansprüche

1. Elektrische, gasisolierte, metallgekapselte Hochspan-nungsanlage, mit einem als Kapselung dienenden zylinderförmigen Gehäuse (10) und wenigstens einem Innenleiter und einem Kabelanschluß für einen Schaltkammerraum, dadurch gekennzeichnet, daß der wenigstens eine Kabelanschluß (24, 25; 80, 87) und eine Durchführungsanordnung (78, 79, 86) für einen Schaltkammerraum und weitere Komponenten, beispielsweise ein Kurzschließer (53) und/oder eine Spannungsanzeigeanordnung und dgl. für jede Phase jeweils am Umfang des zylinderförmigen Gehäuses (10) im wesentlichen in einer Ebene angeschlossen sind, die senkrecht zum Innenleiter oder der Mittelachse des zylinderförmigen Gehäuses verläuft.

2. Hochspannungsanlage nach Anspruch 1, dadurch gekennzeichnet, daß der Innenleiter eine der Anzahl der Phasen entsprechende Anzahl von Anschlußblöcken (13, 14, 15) aufweist, die gegeneinander und gegen das Gehäuse mittels dazwischen befindlicher Isolierelemente (16, 17, 18 und 19) isoliert sind, und daß die Anschlußblöcke jeder Phase und die Isolierelemente in einer Achse liegen.

3. Hochspannungsanlage nach Anspruch 1, dadurch gekennzeichnet, daß der wenigstens eine Kabelanschluß, der Anschluß für einen Schaltraum und der Anschluß weiterer Komponenten am Anschlußblock jeder zugehörigen Phase angeschlossen ist.

4. Hochspannungsanlage nach einem der vorherigen Ansprüche, dadurch gekennzeichnet, daß die am Gehäuse (10) angeordneten Komponenten Schaltkammerraum, Kabeldurchführungen und Kurzschließer jeweils um 90° gegeneinander am Umfang des Gehäuses (10) verteilt sind.

5. Hochspannungsanlage nach Anspruch 4, dadurch gekennzeichnet, daß jeweils zwischen zwei in 90° zueinander angeordneten Komponenten weitere Komponenten einfügbar sind.

## Claims

1. Electric, gas-filled, metal-enclosed high-voltage switchgear unit, having a cylindrical housing (10) serving as an enclosure, and at least one inner conductor and a cable connection for an interrupter chamber space, characterized in that the at least one cable connection (24, 25; 80, 87) and one bushing arrangement (78, 79, 86) for an interrupter chamber space and further components, for example a short-circuiter (53) and/or a voltage display arrangement and the like for each phase are respectively connected on the circumference of the cylindrical housing (10) essentially in a plane which extends at right angles to the inner conductor or the central axis of the cylindrical housing (10).

2. High-voltage switchgear unit according to Claim 1, characterized in that the inner conductor has a number, corresponding to the number of phases, of connection blocks (13, 14, 15) which are insulated from one another and from the housing by means of insulating elements (16, 17, 18 and 19) located therebetween, and in that the connection blocks of each phase and the insulating elements are situated on one axis.

3. High-voltage switchgear unit according to Claim 1, characterized in that the at least one cable connection, the connection for an interrupter space and the connection of further components are connected to the connection block of each associated phase.

4. High-voltage switchgear unit according to one of the preceding claims, characterized in that the components, arranged on the housing (10), of interrupter chamber space, cable bushings and short-circuiter are respectively distributed at 90° relative to one another on the circumference of the housing (10).

5. High-voltage switchgear unit according to Claim 4, characterized in that further components can respectively be inserted between two components arranged at 90° relative to one another.

## Revendications

1. Installation électrique à haute tension, sous enveloppe métallique, à isolation gazeuse, comportant une enveloppe (10) cylindrique formant blindage ainsi qu'au moins un conducteur intérieur et un raccordement de câble pour une chambre de coupure, caractérisée par le fait que le raccordement de câble (24, 25; 80, 87) au nombre d'au moins un et un dispositif de traversée (78, 79, 86) pour une chambre de coupure et pour d'autres composants, par exemple un sectionneur de mise à la terre (53) et/ou un dispositif d'indication de tension ou similaire, sont prévus pour chaque phase à la périphérie de l'enveloppe cylindrique (10), essentiellement dans un plan qui s'étend perpendiculairement au conducteur intérieur ou à l'axe médian de l'enveloppe cylindrique.

2. Installation électrique à haute tension selon la revendication 1, caractérisée par le fait que le conducteur intérieur présente des blocs de raccordement (13, 14, 15) en nombre égal aux phases, qui sont isolés les uns vis-à-vis des autres et vis-à-vis de l'enveloppe au moyen d'éléments (16, 17, 18 et 19) disposés entre deux et par le fait que les blocs de raccordement de chaque phase et les éléments isolants sont situés sur un axe.

3. Installation électrique à haute tension selon la revendication 1, caractérisée par le fait que le raccordement de câble au nombre d'au moins un, le raccordement pour une chambre de coupure et le raccordement d'autres composants sont reliés au bloc dc raccordement de chaque phase concernée.

4. Installation électrique à haute tension selon une des revendications précédentes, caractérisée par le fait que les composants disposés sur l'enveloppe (10), chambre de coupure, traversées de câbles et sectionneur de mise à la terre sont répartis sur la périphérie de l'enveloppe (10) avec un espacement mutuel de 90°.

5. Installation électrique à haute tension selon la revendication 4, caractérisée par le fait que d'autres composants peuvent être insérés entre deux composants mutuellement espacés de 90°.
